# EUROPEAN PATENT APPLICATION

(11) **EP 4 763 926 A1**
(43) Date of publication of application: **24.06.2026**
(21) Application number: 24221333.8
(22) Date of filing: 19.12.2024
(51) Int. Cl.: C09D 11/102, C09D 11/38, C09D 11/322

(54) **INK COMPOSITION AND IMAGE RECORDING METHOD SUITABLE FOR MANUFACTURING PRINTED CORRUGATED CARDBOARD**

(71) Applicant: AGFA NV, 2640 Mortsel (BE)
(72) Inventor: BERTELS, Ellen, 2640 Mortsel (BE)
(74) Representative: Lingier, Stefaan Frans L.

(57) **Abstract**

An aqueous inkjet ink composition for manufacturing printed corrugated card board comprising a pigment, a water-soluble alkane diol in an amount not less than 10 wt.% and not more than 37 wt.% with respect to the total weight of the ink, a water-soluble alkyl glycol ether in an amount not less than 5 wt.% and not more than 20 wt.% with respect to the total weight of the ink, a block copolymer of ethylene oxide and propylene oxide ether in an amount not less than 2 wt.% and not more than 10 wt.% with respect to the total weight of the ink and a non-ionic surfactant. A recording method and apparatus for providing printed corrugated card board is also provided.

## Description

### Technical Field

The present invention relates to an ink composition and image recording method suitable for manufacturing printed corrugated cardboard using high printing speeds.

### Background Art

Corrugated cardboard is a preferred packaging material as it is low cost and lightweight. Lightweight packaging material reduces transportation costs and facilitates the handling during delivery to the customer. A further benefit is that corrugated cardboard boxes are stackable, making them easy to store and transport.

Corrugated cardboard is formed by gluing one or more fluted sheets of paperboard (also called corrugating medium) to one or more flat sheets of linerboard (also called facings). Commonly, two types of corrugated card-board are used as packaging material: single face cardboard with one fluted sheet glued to one facing (total two sheets) and single wall card board with one fluted sheet sandwiched between two facings (total three sheets).

One could use up to seven paper sheets for the production of corrugated boards (resulting in so-called triple wall corrugated boards).

The main part of the used corrugated board for packaging applications requires a decorative appearance or requires information and /or coding, which is typically achieved by printing an image, text or (bar or QR) codes. Most of the corrugated board for packaging applications is printed by analogue flexographic printing, either in single or in multiple colors. The manufacturing of the printing cylinder, which is required for flexographic printing, is very complex and costly and therefore can be economically justified only at high numbers of the printed parts of the same design. As soon as any change in the printing design is required, new printing cylinders need to be manufactured. The cylinders may be stored to avoid making new ones, however this requires large storage room.

When the number of printed samples is low or variable data has to be printed such as bar codes or QR codes, only digital printing is an industrially relevant, alternative printing technique. In inkjet printing, the printhead(s) may be driven according to an electronical pattern across the substrate or may be fixed above the substrate (which is typically moved through the machine by a conveying system), thereby producing an image on the substrate when passing the printhead(s) once (single pass printing) or repeatedly (multi pass printing).

Inkjet printing is a suitable method for applying a print on corrugated board, especially when the so-called pre-print technique (the print is applied to a paper liner before the manufacturing of the corrugated board) and/or the so called post print technique (the print is applied onto the readymade corrugated board) is used.

A newer method is the integration of a digital printing unit (typically an inkjet printing unit) into a corrugated board manufacturing machine, such as a corrugator or a corrugated board production line (see e.g. DE 10 2013 202 871A1 or WO 2014/128115 A1), or an existing printing line such as an offset press. This method has advantages as compared to the analogue flexography printing in regard of the manufacturing costs and in production flexibility.

However, in-line digital printing in a corrugated board production line requires inks with exceptional requirements, like high frequency/speed jettability, good drying performance, high stability, good wetting performance on a wide range of substrates, high water resistance as well as high abrasion resistance, in particular under heat exposure.

When retroactively integrating a printing unit into an existing corrugator, it is not possible to incorporate a drying unit as the required space is not available. State of the art corrugators produce cardboard at (varying) conveying speeds of the paper board or liner in the order of 150 m/min up to 450 m/min. This requires inkjet inks on the paper board or liner that should not contaminate the face roller as one of the transport rollers of the corrugator or corrugated board production line, downstream the paper web, even when the ink is still not dry. This contamination is also called offset. An offset phenomenon in which the images transfer to the roller or the like will cause roller stain and lead to image defects in the printed card-board and staining of unprinted board areas.

EP4065652A discloses an aqueous ink comprising a film forming agent for inkjet printing on a corrugated board or on a liner for the production of corrugated board. Film forming agents may form insoluble films in ink tanks and ink tubes during stand still of the printing equipment.

EP2230281A discloses ink compositions having a latex having a high glass transition temperature and an organic solvent having a SP value of 27.5 or lower. The inks still have to be dried before the printed images comes into contact with a face roller and offset is avoided.

EP1520884A discloses a non-aqueous ink composition containing a charged particle containing at least a coloring material, a copolymer having a polyester structure and a polymer having a liquid crystalline structure.

EP1794245A discloses a recording ink with excellent discharge stability and storage stability, which rapidly penetrates into a recording medium and forms a coating due to the presence of resin particles of silicone modified acrylic resin. The printed inks still have to be dried before fixing properties onto a cotton swab can be evaluated.

US2014077486A discloses ink compositions comprising penetrants to shorten the drying time of the ink adhered to a recording medium. However, because penetrants also promote penetration of the colorants into the paper substrate, a polymer compound is added to avoid lower image density.

US 2010/0239759A1 discloses ink compositions which comprise penetrants and a water-soluble organic solvent having an SP value of 27.5 or lower to avoid blocking of offset, in which image portions transfer to the rear side of the upper recording medium at high-speed recording using a single pass method.

Most of the above cited prior art has in common that polymers have to be included in the aqueous ink jet ink. It is known that polymers have the tendency to form coatings and films which have a negative effect on the jetting reliability due to blocking of nozzles, film formation in the ink tanks and tubes.

There is still a need for a high-speed image recording method for paper substrates wherein ink drying can hardly occur, avoiding offset onto face rollers in printing equipment or corrugator production lines and providing excellent color depth of the printed image (in the absence of a primer) with excellent jetting reliability.

### Summary of invention

It is the objective of the present invention to provide a solution to the above stated problems. The objective has been achieved by providing an aqueous inkjet ink as defined in Claim 1.

It is a further objective of the present invention to provide a recording method as defined in Claim 7.

Other features, elements, steps, characteristics and advantages of the present invention will become more apparent from the following detailed description of preferred embodiments of the present invention. Specific embodiments of the invention are also defined in the dependent claims.

### Description of embodiments

### A. Aqueous inkjet ink

The aqueous inkjet ink according to the invention comprises a pigment, a water-soluble alkane diol in an amount not less than 10 wt.% and not more than 37 wt.%, preferably not more than 25 wt.% with respect to the total weight of the ink, a water-soluble alkyl glycol ether in an amount not less than 4 wt.%, preferably not less than 12 wt.% and not more than 20 wt.%, preferably not more than 15 wt.% with respect to the total weight of the ink, a block copolymer of ethylene oxide and propylene oxide ether in an amount not less than 2 wt.% and not more than 10 wt.% with respect to the total weight of the ink and a non-ionic surfactant.

Without being bound by a theory, it is thought that due to the specific combination of water, water-soluble alkane diol, alkyl glycol ether and a block copolymer of ethylene oxide and propylene oxide ether, the liquid vehicle of the ink (which comprises the water and the water-soluble organic solvents of the ink) penetrates very fast into the paper substrate leading to excellent offset values, while at least a major part of the pigment remains at the surface of the paper substrate due to the presence of the block copolymer of ethylene oxide and propylene oxide ether, leading to excellent color depths an homogeneity of the printed image.

### <Pigment>

The pigment in the aqueous inkjet ink according to the invention may be black, white, cyan, magenta, yellow, red, orange, violet, blue, green, brown, mixtures thereof, and the like. A color pigment may be chosen from those disclosed by HERBST, Willy, et al. Industrial Organic Pigments, Production, Properties, Applications. 3rd edition. Wiley - VCH, 2004. ISBN 3527305769.

Suitable pigments for the invention are disclosed in paragraphs [0128] to [0138] of WO 2008/074548.

The pigment used in the present invention is not particularly limited and may be either an organic pigment or an inorganic pigment and may also be used in the form of a mixture of these pigments.

Examples of the organic pigment include at least one pigment selected from the group consisting of condensed polycyclic pigments such as anthraquinone-based pigments, quinacridone-based pigments, indigo-based pigments, dioxazine-based pigments, perylene-based pigments, perinone-based pigments, isoindolinone-based pigments, isoindoline-based pigments, phthalocyanine-based pigments, quinophthalone-based pigments and diketopyrrolopyrrole-based pigments, and azo-based pigments such as diazo-based pigments and condensed azo-based pigments. Of these organic pigments, from the viewpoint of improving color reproducibility thereof, preferred is at least one pigment selected from the group consisting of quinacridone-based pigments, azo-based pigments and phthalocyanine-based pigments.

Specific examples of the quinacridone-based pigments that are capable of exhibiting a magenta color include C.I. PR (Pigment Red) 122, PR 192, PR 202, PR 207 and PR 209; and C.I. PV (Pigment Violet) 19, etc. Of these quinacridone-based pigments, preferred is at least one pigment selected from the group consisting of C.I. PR 122, C.I. PV 19. Specific examples of the azo-based pigments that are capable of exhibiting a yellow color include C.I. PY (Pigment Yellow) 74, PY 151, PY 154, PY 155, PY 180 and PY 213. Of these azo-based pigments, preferred is at least one pigment selected from the group consisting of C.I. PY 74, C.I. PY154 and C.I. PY 155. Specific examples of the phthalocyanine-based pigments that are capable of exhibiting a cyan color or a green color include C.I. PB (Pigment Blue) 15:1, PB 15:2, PB 15:3, PB 15:4, PB 15:5, PB 15:6 and PB 16; and C.I. PG (Pigment Green) 7 and PG 36. Of these phthalocyanine pigments, from the viewpoint of well exhibiting a cyan color, preferred is at least one pigment selected from the group consisting of C.I. PB 15:3 and C.I. PB 15:4.

The organic pigment may also include a derivative of the organic pigment as a raw material thereof. The organic pigment derivative may be produced by conducting such a treatment in which a functional group such as a hydroxy group, a carboxy group, a carbamoyl group, a sulfo group, a sulfonamide group, a phosphonate group and a phthalimidomethyl group is bonded to the surface of the organic pigment.

Examples of the inorganic pigment include carbon blacks and metal oxides such as alumina and titanium dioxide. These inorganic pigments may be treated with a conventionally known hydrophobization agent such as a titanium coupling agent, a silane coupling agent and a higher fatty acid metal salt, etc.

The carbon blacks are preferably used for black inks. Examples of the carbon blacks include furnace blacks, gas black, thermal lamp blacks, acetylene blacks and channel blacks, and the carbon blacks may also be surface-treated carbon blacks.

The pigment particles are preferably dispersed in an aqueous medium using a polymeric dispersant, a surfactant or a combination thereof or encapsulated by a crosslinked polymeric shell. Self-dispersible pigments can also be used. The latter cand result in more efficient crashing and prevents interaction of the polymeric dispersant with the dispersing groups of binders or capsules which may be included in the inkjet ink (see below).

A self-dispersible pigment is a pigment having on its surface covalently bonded anionic hydrophilic groups or salt-forming groups, that allow the pigment to be dispersed in an aqueous medium without using a surfactant or a resin.

The technology for making self-dispersible pigments is well-known. For example, EP1220879A discloses pigments having attached a) at least one steric group and b) at least one organic ionic group and at least one amphiphilic counterion, wherein the amphiphilic counterion has a charge opposite to that of the organic ionic group that are suitable for inkjet inks. Also EP906371A discloses suitable surface-modified colored pigment having attached hydrophilic organic groups containing one or more ionic groups or ionizable groups. Suitable commercially available self-dispersible color pigments are, for example, the CAB-O-JET^{™} inkjet colorants from CABOT.

Pigment particles in inkjet inks should be sufficiently small to permit free flow of the ink through the inkjet-printing device, especially at the ejecting nozzles. It is also desirable to use small particles for maximum color strength and to slow down sedimentation.

Suitable white pigments are given by Table 2 in [0116] of WO 2008/074548. The white pigment is preferably a pigment with a refractive index greater than 1.60. The white pigments may be employed singly or in combination. Preferably titanium dioxide is used as pigment with a refractive index greater than 1.60. Suitable titanium dioxide pigments are those disclosed in [0117] and in [0118] of WO 2008/074548.

The pigment particles may also be dispersed in an aqueous medium using a polymeric dispersant, a surfactant or a combination thereof.

Suitable polymeric dispersants are copolymers of two monomers, but they may contain three, four, five or even more monomers. The properties of polymeric dispersants depend on both the nature of the monomers and their distribution in the polymer. Co-polymeric dispersants preferably have the following polymer compositions:
- statistically polymerized monomers (e.g. monomers A and B polymerized into ABBAABAB);
- alternating polymerized monomers (e.g. monomers A and B polymerized into ABABABAB);
- gradient (tapered) polymerized monomers (e.g. monomers A and B polymerized into AAABAABBABBB);
- block copolymers (e.g. monomers A and B polymerized into AAAAABBBBBB) wherein the block length of each of the blocks (2, 3, 4, 5 or even more) is important for the dispersion capability of the polymeric dispersant;
- graft copolymers (graft copolymers consist of a polymeric backbone with polymeric side chains attached to the backbone); and
- mixed forms of these polymers, e.g. blocky gradient copolymers.

Suitable dispersants are DISPERBYK^{™} dispersants available from BYK CHEMIE, JONCRYL^{™} dispersants available from BASF and SOLSPERSE^{™} dispersants available from Lubrizol. Other suitable dispersants are Edaplan 482 from Münzing. A detailed list of non-polymeric as well as some polymeric dispersants is disclosed by MC CUTCHEON. Functional Materials, North American Edition. Glen Rock,N.J.: Manufacturing Confectioner Publishing Co., 1990. p.110-129.

The polymeric dispersant has preferably a number average molecular weight Mn between 500 and 30000, more preferably between 1500 and 10000.

The polymeric dispersant has preferably a weight average molecular weight Mw smaller than 100000 more preferably smaller than 50000 and most preferably smaller than 30000.

In a preferred embodiment of the invention the aqueous ink comprises a pigment which is encapsulated by means of a cross-linked polymeric shell. Encapsulated pigments provide printed images having improved physical properties such as water resistance and dry rub resistance with respect to pigments dispersed by means of un-cross-linked polymers.

Suitable encapsulated pigments are provided by Lubrizol as Diamond HSDX-dispersions, by Fujifilm as RxD pigment dispersions such as APD1000 and APD4000 premium dispersions and by Cabot as EPD dispersions.

The pigments are preferably present in the range of 0.05 to 15 %, more preferably in the range of 0.1 to 10 % by weight and most preferably in the range of 0.2 to 6 % by weight, each based on the total weight of the inkjet ink. For white inkjet inks, the white pigment is preferably present in an amount of 3% to 40% by weight of the inkjet ink, and more preferably 5% to 35%. An amount of less than 0.05% by weight cannot achieve sufficient covering power.

The average pigment particle size is preferably between 0.050 and 1 µm, more preferably between 0.070 and 0.300 µm and particularly preferably between 0.080 and 0.200 µm. Most preferably, the numeric average pigment particle size is no larger than 0.150 µm. The average particle size of pigment particles is determined with a Brookhaven Instruments Particle Sizer BI90 plus based upon the principle of dynamic light scattering.

### <Block copolymer of ethylene oxide and propylene oxide ether>

The aqueous inkjet ink according to the invention comprises a block copolymer of ethylene oxide and propylene oxide ether. This ether reduces the offset of undried inkjet ink onto surfaces such as surfaces of the rollers in a corrugator while further increasing the color depts of printed inkjet images and improving jetting reliability.

Preferably, the amount of this block copolymer of ethylene oxide and propylene oxide ether is not less than 2 wt.%, preferably not less than 3 wt.% and not more than 10 wt.%, preferably not more than 7 wt.% with respect to the total mass of the inkjet ink. If the amount of the block copolymer of ethylene oxide and propylene oxide ether is less than 2 wt.%, the effect on offset and color depth is not noticeable. If the amount of this ether is more than 10 wt.%, jetting reliability decreases significantly. In a preferred embodiment of the invention, the block copolymer of ethylene oxide and propylene oxide ether according to formula (A) or (B) wherein n is a number not less than 2 and not more than 37, m is a number not less than 30 and not more than 56.

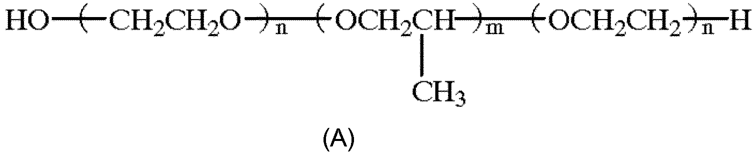

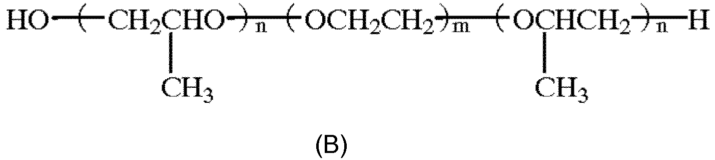

In a more preferred embodiment of the invention, the average molecular weight of the polypropylene oxide block is not less than 850 g/mole and not more than 3500 g/mole, while the content of the polyethylene oxide blocks in the copolymer is not less than 10 wt.% and not more than 90 wt. %.

Suitable commercial block copolymers of ethylene oxide and propylene oxide ether are from BASF Corporation under the name Pluronic surfactants, Synperonic^{™} PE & Synperonic T Series EO/PO Block Copolymers from Croda, Ineox surfactants from Ineos. More particularly, the Pluronic surfactants according to Formula (A) are PE 6100, Pluronic PE 6120, Pluronic PE 6200, Pluronic L62, Pluronic PE 6400, Pluronic L64, Pluronic PE 6800, Pluronic F68, Pluronic PE 7400, Pluronic PE 8100, Pluronic L81, Pluronic PE 9200, Pluronic L92, Pluronic PE 9400, Pluronic PE 10100, Pluronic PE 10300, Pluronic P103, Pluronic PE 10400, Pluronic P104, Pluronic PE 10500.

Suitable commercial block copolymers according to Formula (B) are Pluronic RPE grades from BASF Corporation.

### <Water-soluble alkane diol>

The ink composition of the invention contains at least one water-soluble alkane diol in an amount not less than 10 wt.% and not more than 37 wt.%, preferably not more than 35 wt.%, more preferably not more than 25 wt.% with respect to the total amount of the ink.

This alkane diol is incorporated in the aqueous inkjet ink to prevent drying and clogging of ejection nozzles due to aggregates formed of adhered and dried ink.

Clogging of the ejection nozzles of a print head impairs severely the jetting behaviour, especially at the start-up also called latency of the printing process.

For preventing ink drying at the ejection nozzles, the alkane diol preferably has a lower vapor pressure than that of water.

Examples of the water-soluble alkane diols are ethylene glycol, propylene glycol, 1,3-propane diol, diethylene glycol, triethylene glycol, tetraethylene glycol, pentaethylene glycol, dipropylene glycol, 1,3-butanediol, 2,3-butanediol, 2-butene-1,4-diol, 2-ethyl-1,3-hexanediol, 2-methyl-2,4-pentanediol, 1,2-octanediol, 1,2-hexanediol, 1,2-pentanediol, 4-methyl-1,2-pentanediol, 2-ethyl-2-methyl-1,3-propanediol, 3,3-dimethyl-1,2-butanediol, 2,2-diethyl-1,3-propanediol, 2-ethyl-1,3-hexanediol, 2,2,4-trimethyl-1,3-pentanediol, 2-methyl-2-propyl-1,3-propanediol, 2,4-dimethyl-2,4-pentanediol, 2,5-dimethyl-2,5-hexane diol, 5-hexene-1,2-diol, 2-ethyl-1,3-hexanediol, tripropylene glycol, polypropylene glycol having the number of propylene oxide groups of greater than or equal to 4, butylene glycol, 1,6-hexanediol, pentanediol, thiodiglycol.

If the aqueous inkjet ink comprises alkane diols below the above mentioned range, the effect of drying prevention is insufficient to assure continuous ink jetting reliability and sufficient good offset at high printing speeds. If the aqueous inkjet ink comprises alkane diols above the above mentioned range, offset onto transporting rollers prevents high printing speeds.

### <Alkyl glycol ether>

The aqueous inkjet ink according to the invention comprises glycol ethers in an amount not less than 4 wt.%, preferably not less than 12 wt.% and not more than 20 wt.%, preferably not more than 15 wt.% with respect to the total weight of the ink. In this amount, the alkyl glycol ethers function as a penetrant helping the penetration of the ink vehicle resulting in low offset levels and keeping at least a part of the pigment at the surface of the paper substrate at the same time.

Suitable examples of alkyl glycol ethers are ethylene glycol monomethyl ether, ethylene glycol monomethyl ether, ethylene glycol monobutyl ether, ethylene glycol monomethyl ether acetate, diethylene glycol monomethyl ether, diethylene glycol mono ethyl ether, diethylene glycol mono-n-propyl ether, ethylene glycol mono-iso-propyl ether, diethylene glycol mono-iso-propyl ether, ethylene glycol mono-n-butyl ether, ethylene glycol mono-t-butyl ether, diethylene glycol mono-t-butyl ether, 1-methyl-1-methoxybutanol, propylene glycol monomethyl ether, propylene glycol monomethyl ether, propylene glycol mono-t-butyl ether, propylene glycol mono-n-propyl ether, propylene glycol mono-iso-propyl ether, dipropylene glycol monomethyl ether, dipropylene glycol mono ethyl ether, tripropylene glycol monomethyl ether, dipropylene glycol mono-n-propyl ether, dipropylene glycol mono butyl ether or dipropylene glycol mono-iso-propyl ether.

If the aqueous inkjet ink comprises alkyl glycol ethers below the above mentioned range, the effect of penetration while keeping the pigments at the surface of the paper substrate is insufficient to assure sufficient color depth and good offset at high printing speeds. Alkyl glycol ethers above the mentioned range lead to storage stability problems of the aqueous inkjet inks.

### <Alkyl alcohol having an alkyl group comprising 1 to 7 carbon atoms>

In a preferred embodiment of the invention, the aqueous inkjet ink comprises an alkyl alcohol having an alkyl group comprising 1 to 7 carbon atoms in an amount not less than 1 wt.% and not more than 5 wt.%. This alkyl alcohol improves the spreading and penetration of the ink vehicle while keeping the pigments at the surface of the paper substrate, leading to excellent image quality and color depths respectively of the printed image.

Suitable examples of alkyl alcohols having an alkyl group comprising 1 to 7 carbon atoms are ethanol, methanol, butanol, propanol, isopropanol, iso butanol, pentanol and hexanol.

If the aqueous inkjet ink comprises alkyl alcohols below the above mentioned range, the ink spreading and effect of keeping the pigments at the surface of the paper substrate is insufficient to further improve image quality an color depth of the printed images. If the aqueous inkjet ink comprises alkyl alcohols above the above mentioned range, instabilities in the ink formulation can occur, especially upon storage of the ink.

### <Non-ionic surfactant>

A non-ionic surfactant is added to the aqueous inkjet ink according to the invention for the purpose of ensuring good jettability, decreased offset and improved wettability of the ink onto the paper substrate.

Examples of suitable non-ionic surfactants include acetylene glycol-based surfactants, polyoxyethylene alkyl ether, polyoxyethylene alkylphenyl ether, polyoxyethylene alkyl ester, alkoxy polyglycol ether, fatty alcohol alkoxylates, modified ethoxylates, polysiloxanes and polyoxyethylene sorbitan fatty acid esters.

The acetylene glycol surfactant is preferably one or more selected from 2, 4, 7, 9-tetramethyl-5-decyne-4, 7-diol, alkylene oxide adducts of 2,4,7,9-tetramethyl-5-decyne-4, 7-diol, 2,4-dimethyl-5-decyn-4-ol, and alkylene oxide adducts of 2,4-dimethyl-5-decyn-4-ol. These are available from Nissin Chemical Industry, for example, as Olfine (registered trademark) E series, such as Olfine E1010, or from Evonik (formerly Air Products (GB)) as Surfynol (registered trademark), 104, Surfynol 465, Surfynol 61. Surfynol DF110, Dynol 604 Surfynol DF110L, Surfynol DF110D, Surfynol AD01 and ethoxylated derivatives such as CAS Registry Number 91629-35-5.

Examples of commercially available fatty alcohol alkoxylates are Hydropalat WE-series such as Hydropalat WE3120, WE3130, 3197, 3694. An example of a modified ethoxylate is Hydropalat WE3650.

The added amount of the non-ionic surfactant is determined based on the types and amounts of the water-soluble organic solvents as well as other additives, but is preferably not less than 0.01 wt.% and not more than 5 wt.% with respect to the total weight of the ink.

It is preferable that the non-ionic surfactant be contained in such an amount that the static surface tension of the ink composition may be adjusted to be within a range of from 20 mN/m to 45 mN/m, in view of performing the spreading of the ink composition satisfactorily onto the substrate, and more preferably the surfactant is contained in such an amount that the surface tension of the ink composition may be adjusted to be within a range of from 24 mN/m to 40 mN/m, and even more preferably within a range of from 24 mN/m to 35 mN/m.

When the static surface tension of the ink is within the above mentioned range, the ink vehicle penetrates quickly into the paper substrate and beading is decreased, leading to excellent offset properties.

### <Viscosity>

The viscosity at jetting temperature of the aqueous ink according to the invention is preferably not less than 1.2 mPa.s and not more than 15.0 mPa.s, more preferably not more than 10 mPa.s. If the viscosity of the aqueous inkjet ink is outside the above range, inks do not fit specifications of the targeted printheads.

### <Water>

The aqueous inkjet ink has water as main component making part of the ink vehicle. The water content in the ink is preferably between 30 wt.% and 70 wt.% with respect to the total weight of the ink. If the amount of water is below this range, viscosity of the ink is getting outside the preferred range leading to bad jetting reliability.

### <Resin>

The inkjet ink composition according to the invention may comprise a resin. The resin is often added to the inkjet ink formulation to achieve a good adhesion of the pigment to the paper substrate and a good abrasion resistance. The resin is preferably a polymer and suitable resins can be an acrylic based resin, a polyester resin, a urethane resin or a wax.

The polyurethane resin is to be incorporated in the ink formulation as a dispersion and may be selected from the group consisting of aliphatic polyurethane dispersions, aromatic polyurethane dispersions, anionic polyurethane dispersions, non-ionic polyurethane dispersions, aliphatic polyester polyurethane dispersions, aliphatic polycarbonate polyurethane dispersions, aliphatic acrylic modified polyurethane dispersions, aromatic polyester polyurethane dispersions, aromatic polycarbonate polyurethane dispersions, aromatic acrylic modified polyurethane dispersions, for example, or a combination of two or more of the above.

A preferred urethane resin to be used as dispersion in the ink of the invention is a polyester resin including a structural unit containing a urethane bond. Among such resins, a water-soluble or water-dispersible urethane-modified polyester resin is preferred. It is preferable that the urethane-modified polyester resin include at least one structural unit derived from a hydroxyl group-containing polyester resin (polyester polyol) and at least one structural unit derived from an organic polyisocyanate.

A preferred polyurethane resin to be included in the ink of the invention is a polyurethane resin obtainable by reacting a polyester polyol, a polyether diol, a polyol containing an anionic group and a polyisocyanate. A particular preferred polyurethane resin is a polyurethane resin obtainable by reacting a polyester polyol, a polyether diol, a polyol containing an anionic group and a polyisocyanate, and wherein the polyester polyol is obtained by reacting an aromatic polycarboxylic acid and a polyol. Examples of suitable polyurethane resins and their preparations are disclosed in the patent application EP3532545A.

Some examples of suitable polyurethane dispersions are NEOREZ R-989, NEOREZ R-2005, and NEOREZ R-4000 (DSM NeoResins); BAYHYDROL UH 2606, BAYHYDROL UH XP 2719, BAYHYDROL UH XP 2648, and BAYHYDROL UA XP 2631 (Covestro); DAOTAN VTW 1262/35WA, DAOTAN VTW 1265/36WA, DAOTAN VTW 1267/36WA, DAOTAN VTW 6421/42WA, DAOTAN VTW 6462/36WA (Allnex); and SANCURE 2715, SANCURE 20041, SANCURE 2725 (Lubrizol Corporation), for example, or a combination of two or more of the above.

Acrylic based resins include polymers of acrylic monomers, polymers of methacrylic monomers, and copolymers of the aforementioned monomers with other monomers. These resins are present as a suspension of particles having an average diameter of about 30 nm to about 300 nm. The acrylic latex polymer is formed from acrylic monomers or methacrylic monomer residues. Examples of monomers of the acrylic latex polymer include, by way of illustration, acrylic monomers, such as, for example, acrylate esters, acrylamides, and acrylic acids, and methacrylic monomers, such as, for example, methacrylate esters, methacrylamides, and methacrylic acids. The acrylic latex polymer may be a homopolymer or copolymer of an acrylic monomer and another monomer such as, for example, a vinyl aromatic monomer including, but not limited to, styrene, styrene butadiene, p-chloromethylstyrene, divinyl benzene, vinyl naphthalene and divinylnaphthalene.

Some examples of suitable acrylic latex polymer suspensions are, JONCRYL 537 and JONCRYL 538 (BASF Corporation, Port ArthurTX); CARBOSET GA-2111, CARBOSET CR-728, CARBOSET CR-785, CARBOSET CR-761, CARBOSET CR-763, CARBOSET CR-765, CARBOSET CR-715, and CARBOSET GA-4028 (Lubrizol Corporation); NEOCRYL A-1110, NEOCRYL A-1131, NEOCRYL A-2091, NEOCRYL A-1127, NEOCRYL XK-96, and NEOCRYL XK-14 (DSM); and BAYHYDROL AH XP 2754, BAYHYDROL AH XP 2741, BAYHYDROL A 2427, BAYHYDROL A2651 (Bayer), Mowinyl 6899D and 6969D, 6800, and 6810 (Japan Coating Resin Co. Ltd.) or a combination of two or more of the above.

The concentration of the resin in the ink jet ink according to the invention is at least 0.5 wt.% and preferably less than 30 wt.%, more preferably less than 10 wt.%.

The aqueous inkjet ink of the invention may also comprise a wax. The wax in the ink influences friction coefficient and improves (wet) rub or (wet) scratch resistance of the printed layer.

Generally, any suitable wax may be used in the ink composition. As such, the wax may be polyethylene waxes, petroleum waxes, paraffin waxes, carnauba waxes, polypropylene waxes, crystalline and microcrystalline waxes, amide waxes (oleamide, stearamide, erucamide, cyclic amide, etc... ), and combinations thereof. In an aspect of the invention, the wax may be a high density polyethylene wax.

In an aspect of the invention, the wax may be a polyethylene wax or modified paraffin wax. An example of polyethylene wax includes high density polyethylene (HDPE) wax, which has a density ranging from about 0.93 g/mL to 0.97 g/mL.

An example of modified paraffin wax particles includes paraffin wax that has been modified to improve dispersibility in water, e.g., via emulsification. The modified paraffin wax may be surface modified, chemically modified, etc.

Some specific examples of wax that may be used include those of the JONCRYL Wax series (such as JONCRYL Wax 22, JONCRYL Wax 26, and JONCRYL Wax 120 available from BASF Corp.), those of the AQUACER series (such as AQUACER 498, AQUACER 501, AQUACER 505, AQUACER 513, AQUACER 530, AQUACER 531, AQUACER 535, AQUACER 537, AQUACER 539, and AQUACER 552 available from BYK-Gardner, Columbia, Md. ) and Liquilube 404E from Lubrizol .

The wax may have i) a high melting temperature T and/or ii) a small average particle size suitable for ink jetting. In an example, the wax may have a high melting T such as one that is equal to or greater than 90°C. Further, the wax may have an average particle size (in terms of effective diameter assuming that the individual wax particles are not perfectly spherical) ranging from 0.03 µm to 1.5 µm, more preferably from 0.05 µm to 1 µm(D50). If the particle size exceeds these upper limits, jetting reliability problems of the ink are likely to occur.

The wax may be present in the ink in an amount ranging from 3 to 30 wt. %, more preferably from 1 to 15 wt. %, relative to the total solids weight of the ink.

The inkjet ink composition according to the invention may comprise a capsule. Capsules, more preferably, nanocapsules are often incorporated in inkjet ink formulations to encapsulate colouring agents (US2009227711A, JP2004075759) or to encapsulate reactive ingredients which can cross-link. Particularly useful are the nanocapsules disclosed in WO2015158649 [0037-0110]: The nanocapsules have a polymeric shell surrounding a core containing reactive chemistry. The shell material includes polyureas, polyurethanes, polyesters, polycarbonates, polyamides, melamine based polymers and mixtures thereof, with polyureas and polyurethanes being especially preferred. Other particularly useful nanocapsules are disclosed in WO2016165970 [0051-0138]: the nanocapsules are selfdispersable and include a dispersing group covalently coupled to the shell polymers. The core of the nanocapsules in WO2015158649 [0037-0110] and WO2016165970 [0051-0138] comprise reactive chemistry which is able to form a reaction product upon application of heat and/or light, allowing a wide variety of substrates to be addressed. Other suitable reactive chemistry is the one which is activated upon radiation as described in WO2015158649 [0068-0110].

The capsules are preferably present in the inkjet ink in an amount of no more than 30 wt.%, preferably not less than 5 and not more than 25 wt.% based on the total weight of the ink.

### <Additives>

A biocide may be added to the aqueous inkjet ink of the invention to prevent unwanted microbial growth, which may occur over time. The biocide may be used either singly or in combination. Suitable biocides for the ink-jet ink of the present invention include sodium dehydroacetate, 2-phenoxyethanol, sodium benzoate, sodium pyridinethion-1-oxide, ethyl p-hydroxybenzoate and 1,2-benzisothiazolin-3-one and salts thereof.

Preferred biocides are ProxelTM GXL and ProxelTM Ultra 5 available from ARCH UK BIOCIDES and BronidoxTM available from COGNIS.

A biocide is preferably added to the aqueous medium in an amount of 0.001 to 3 wt.%, more preferably 0.01 to 1.0 wt. %, each based on the total weight of the ink.

The aqueous inkjet ink may further comprise at least one thickener different from the block copolymer of ethylene oxide and propylene oxide ether for viscosity regulation in the liquid. Suitable thickeners include urea or urea derivatives, hydroxyethylcellulose, carboxymethylcellulose, hydroxypropylcellulose, derived chitin, derived starch, carrageenan, xanthan gum, pullulan, proteins, poly(styrenesulphonic acid), poly(styrene-co-maleic anhydride), poly(alkyl vinyl ether-co-maleic anhydride), polyacrylamid, partially hydrolyzed polyacrylamid, poly(acrylic acid), poly(vinyl alcohol), partially hydrolyzed poly(vinyl acetate), poly(hydroxyethyl acrylate), poly(methyl vinyl ether), polyvinylpyrrolidone, poly(2-vinylpyridine), poly(4-vinylpyridine) and poly(diallyldimethylammonium chloride). Particular suitable thickeners are hydrophilically modified PU thickeners (HEUR) like Thijet 170 from Lamberti and Polyacrylic esters (e.g. HASE) like BYK LP-R21675 from BYK.

The thickener is added preferably in an amount of 0.01 to 20 wt.%, more preferably 0.05 to 10 wt.% based on the total weight of the ink.

### B. Image recording method

The image recording method according to the invention including the steps of:
i. Providing a paper substrate; and
ii. Adhering an aqueous ink onto a first surface of the paper substrate by means of an inkjet print head to obtain a printed paper substrate, the aqueous ink comprising a pigment, a water-soluble alkane diol in an amount not less than 10 wt.% and not more than 37 wt.%, preferably not more than 25 wt.% with respect to the total weight of the ink, a water-soluble alkyl glycol ether in an amount not less than 4 wt.%, preferably not less than 12 wt.% and not more than 20 wt.%, preferably not more than 15 wt.% with respect to the total weight of the ink, a block copolymer of ethylene oxide and propylene oxide ether in an amount not less than 2 wt.% and not more than 10 wt.% with respect to the total weight of the ink and a non-ionic surfactant; and
iii. Contacting the first surface of the printed paper substrate with a roller.

This printing method makes it feasible to incorporate a printing unit using the above aqueous ink according to the invention into printing equipments and printing lines which have to handle printed paper substrates at very high conveying speeds such as corrugators, corrugated board production lines, web-based label printers, web based digital presses, offset presses, etc.

### B.1. Providing a paper substrate

The paper substrate which is used in the method according to the invention is not particularly limited to a specific type, but the paper substrate should show a certain absorbability towards the ink vehicle of the aqueous inkjet ink as described in § A.

Absorbing paper substrates include uncoated paper, coated paper, coated paper having an ink receiving layer on at least one surface, offset paper, office paper, newspaper paper, card board, white lined chipboard, folding board.

For packaging applications absorbing paper substrates include card board, paper lines, uncoated liner and paper. The paper can be a single layer or a multilayer paper. The paper liner may be test or kraft liner, top kraft liner, white coated kraft liner or bleached paper board.

The absorbing paper substrate may be manufactured from chemical, wood, or recycled fibre.

In a preferred embodiment of the invention, the paper may be a liner intended for printing into a corrugator and converted into corrugated boards or boxes. In this aspect, the liner paper may be used as a double face liner and may be converted directly in a corrugator or laminated onto a double face liner after corrugation.

In a more preferred embodiment of the invention, the paper substrate such as for example the liner intended for printing into a corrugator is a porous paper substrate such as an uncoated liner. A porous paper substrate is quite challenging as due to the porosity of the paper, the pigments of the aqueous inkjet ink tend to migrate into the paper when water-soluble organic solvents such as alkyl glycol ethers are used as penetrants to obtain good offset properties. When the pigment of the ink penetrates into the paper substrate, low image quality of the printed image such a low color depths and insufficient contrast is obtained.

Quantitatively, a porous paper substrate indicates a 'paper substrate having a porosity, measured using a Gurley air permeability meter, of equal to 100 seconds or less', also expressed as a Gurley porosity below 100 seconds. A Gurley air permeability meter measures the airflow between the paper substrate, clamped between a flat glass plate and a circular metal head. A suitable Air Permeability Tester measuring the air permeability of a paper substrate is a Bendtsen Porosity Tester (RL-BRAPT-A) from Rycolab. The Gurley porosity is calculated from the measured values.

The method according to the invention is useful for paper substrate web width of 1.2 m, 1.6 m, 2.8 m and even up to 3.5 m. Especially, corrugators require a paper substrate web width of 2.8 m.

The paper substrate may also be separate sheets instead of web based paper. Boards used for boxes and other packaging applications are also suitable. Most preferably, the paper substrate is an uncoated paper liner. The absence of a coating further improves penetration of the ink vehicle while keeping at least a part of the pigments at the surface.

### B.2. Conveying speed of paper substrate

The method according to the invention can be applied at a wide range of conveying speeds of the paper substrate.

In a preferred embodiment, the conveying speed at maximum printing speed of the press wherein the method of the invention is to be applied, is not less than 100 m/min, preferably not less than 250 m/min, most preferably not less than 350 m/min. These conveying speeds correspond with conveying speeds used in digital web presses and corrugators. Some corrugators operate at peak conveying speeds of 450 m/min.

Even at these extremely high conveying speeds, the aqueous inkjet ink of the invention as described in § A. does not show offset onto the face rollers of the image recording method of the invention.

### B.3. Adhering an aqueous ink onto a first surface of the paper substrate

The aqueous inkjet ink according to the invention is adhered to the paper substrate to obtain a printed image. The inkjet ink is as described in § A. A preferred method of adhering the aqueous inkjet ink is by means of an ink jetting technique through an inkjet print head, more preferably a throughflow inkjet print head.

A preferred inkjet print head for the jetting of the ink is a piezoelectric ink jet head. Piezoelectric inkjet jetting is based on the movement of a piezoelectric ceramic transducer when a voltage is applied thereto. The application of a voltage changes the shape of the piezoelectric ceramic transducer in the print head creating a void, which is then filled with aqueous inkjet ink. When the voltage is again removed, the ceramic expands to its original shape, ejecting a drop of ink from the inkjet head. However, the jetting of the ink according to the present invention is not restricted to piezoelectric inkjet printing. Other inkjet print heads can be used and include various types, such as a continuous type, a thermal print head type, a Memjet-type of head and a valve jet type.

To obtain high quality printed images with sufficient color depth and contrast on paper substrates, even on uncoated paper substrates, the maximal aqueous inkjet ink coverage of the printed images should be not less than 3 g/m², preferably not less than 5 g/m², most preferably not less than 10 g/m². Ink coverages below these values lead to solids in printed images having insufficient color depth and contrast, especially on uncoated liner, test or kraft paper as commonly used for packaging applications, typically in corrugated card board manufacturing.

### B.4. Contacting the printed substrate with a transport roller

The recording method according to the invention contains a transporting step of the printed paper substrate following to the adhering step of the inkjet ink. This transporting step is done by means of a transport roller wherein the outer surface of the transport roller (also called face roller) contacts the first surface of printed paper.

Extremely high conveying speeds make the time laps between adhering the aqueous inkjet ink, more particularly the last adhering step if more than one inkjet printhead is used, and the contact of the face roller with the printed paper substrate very short. Typically, the time between the adhering step of the ink or the last adhering step of the ink if more than one inkjet printhead is used, and the contact of the face roller with the first surface of the printed paper substrate in the recording method according to the invention is not more than 10 seconds, preferably not more than 3 seconds, most preferably not more than 1 second.

Due to this transporting step and the absence of any offset on the face roller contacting the printed surface of the paper substrate, the method of the invention is particularly suitable to be incorporated in existing presses such as offset presses, digital page wide web presses and corrugators. Indeed, this transporting step gives sufficient flexibility to fit in every printing equipment without contaminating the transport rollers of the existing equipment with ink components.

### B.5. Application of a pre-treatment liquid

Although, the image recoding method according to the invention does not require the application of a pre-treatment liquid onto the paper substrate, the method may also include a step of applying an aqueous pre-treatment liquid comprising a fixing agent onto the paper substrate, prior to the adhering of the aqueous ink. The application of the pre-treatment liquid can be digitally via e.g. an inkjet printing technique or analogous via e.g. a flexographic printing technique.

### <Fixing agent>

The fixing agent present in the pre-treatment composition is preferably a multivalent metal salt, a cationic polymer or an organic acid. The fixing agent serves to crash, precipitate or destabilize the ink colorants and hence fix them to the substrate. This leads to an improved image quality (less bleeding, less coalescence).

The polyvalent metal salt may be present in the pre-treatment composition to improve inkjet print quality. Generally, the polyvalent metal salt may be any water-soluble polyvalent metal salt. In specific examples, the polyvalent metal salt may include calcium chloride (CaCl₂), magnesium chloride (MgCl₂), magnesium sulfate (MgSO₄), aluminium chloride (AlCl₃), calcium nitrate (Ca(NO₃)₂), magnesium nitrate (Mg(NO₃)₂), magnesium acetate (Mg(CH₃COO)₂), zinc acetate (Zn(CH₃COO)₂) calcium propionate (Ca(C₂H₅COO)₂), or a combination thereof. In a particular example, the polyvalent metal salt may be calcium chloride. In further examples, the polyvalent metal salt may include a metal cation selected from calcium, copper, nickel, magnesium, zinc, barium, iron, aluminium, chromium, or another polyvalent metal.

In some cases, the polyvalent metal salt may be present in an amount from 1 wt. % to 99 wt. % with respect to the entire weight of the pre-treatment composition. In more specific examples, the polyvalent metal salt may be present in an amount from 5 wt. % to 65 wt. %, more preferably from 25 wt. % to 60 wt. %, with respect to solids content of the pre-treatment composition. If the amounts are below the lower limits, insufficient fixing of the colorants occur resulting in a reduced image quality.

Polymeric cationic polymers, suitable as fixing agent in the pre-treatment composition contain either guanidinium or fully quaternized ammonium functionalities, such as quaternized polyamine copolymers. Generally, the weight average molecular weight (Mw) of the cationic polymer allows viscosity less than 25 cP at 25°C, as measured on a Brookfield viscometer. Typical Mw are less than 500.000 g/mol, and in one aspect, less than 50.000 g/mol.

Suitable classes of cationic polymers that can be used include, but are not limited to, quaternized polyamines, dicyandiamide polycations, diallyldimethyl ammonium chloride copolymers, quaternized dimethylaminoethyl(meth)acrylate polymers, quaternized vinylimidizol polymers, alkyl guanidine polymers, alkoxylated polyethylene imines, and mixtures thereof.

The application of the pre-treatment liquid to the paper substrate prior to the adhering of the aqueous inkjet can be done by a coating technique such as screen printing, dip coating, knife coating, doctor blade coating or via a jetting technique.

### C. Apparatus for performing the image recording method.

The apparatus for performing the image recording method according to the invention comprises (i) a transport mechanism for providing a paper substrate to the (ii) means for adhering the aqueous inkjet ink onto the paper substrate and (iii) a transport roller placed downstream the conveying direction of the paper substrate and contacting the first surface of the paper substrate whereupon the ink was adhered. The apparatus for performing the recording method according to the invention, corresponds to the above mentioned 'printing unit'.

As the method according to the invention is useful for paper substrate web widths of 1.2 m, 1.6 m, 2.8 m and even up to 3.5 m., the width of the apparatus is at least larger than 1.2 m, 1.6 m, 2.8 m and even up to 3.5 m respectively. Especially for being incorporated in corrugators or corrugated card-board production lines, the apparatus should have a width of 2.8 m or more.

### (i) The transport mechanism

The transport mechanism for providing a paper substrate is not particularly limited but is preferably a conveyer belt, a vacuum conveyer belt, a composition of one or more transport rollers. Providing a paper substrate as a paper web is preferably done by means of an impression cylinder or by means of transport rollers.

### (ii) The means for adhering the aqueous inkjet ink

The means for adhering the aqueous inkjet ink according to the invention is not particularly limited but is preferably an inkjet printhead. The inkjet printhead may be arranged into a shuttle (multi pass system) or into a line, preferably a page wide array, also called line type inkjet printhead (single pass system). Page wide arrays having a width of at least 1.2 m, 1.6 m, 2.8 m and even up to 3.5 m make single pass printing possible.

As the recording method according to the invention is very suitable for high conveying speeds, a line type inkjet printhead (also called print bar) is particularly suitable as this guarantees high printing speeds matching these conveying speeds.

To achieve printed images having a high image quality, the inkjet ink drop resolution of the inkjet printhead should be preferably equal to 225 drops/inch or more, more preferably equal to 300 drops/inch or more, most preferably equal to 800 drops/inch or more. Most actual commercial inkjet printheads have a nozzle density of 1200 nozzles/inch or more along a first axis corresponding with the longest dimension of the nozzle plate of the inkjet printhead. The inkjet printheads may be arranged in an array along this first axis. This array forms a printing bar which is positioned above the first surface of the paper substrate according to a direction perpendicular to the conveying direction of the paper substrate.

In the conveying direction, due to the extremely high conveying speeds, the required drop resolution is achieved by sufficient high jetting frequencies of the printhead. For example, at a conveying speed of 450m/min, set by the corrugator, corrugated board production line, digital web press or offset press, a drop resolution of only 225 dpi can be achieved at a jetting frequency of 66.4kHz per inkjet printhead. This jetting frequency corresponds to an upper limit where the jetting reliability of commercial printheads is guaranteed. In future, inkjet heads with shorter acoustic lengths will allow higher jetting frequencies and higher printing speeds. At these conveying speeds, the maximal ink coverage for a typical drop mass between 5 and 10 ng is between 2.1 and 4 g/m² (assuming a drop resolution of the inkjet printhead of 1200 drops/inch) which is insufficient to obtain solids in the printed images of sufficient color density.

As the jetting frequency of commercially available inkjet printheads is limited at which jetting reliability is guaranteed, the required drop density per ink in the conveying direction can be obtained by the use of 2 or more parallel print bars placed such that their first axis are parallel and perpendicular to the paper conveying direction.

This configuration has the advantage that, e.g. in case of 2 print heads in parallel, due to the doubled drop density, the maximal ink coverage for a typical drop mass between 5 and 10 ng is between 4.2 and 8 g/m² (assuming a drop resolution of the inkjet printhead of 1200 drops/inch), which is within the required range as disclosed in § A.4.

Combining 2 or more inkjet printheads for each ink, parallel to each other in a flat configuration takes considerable space in the apparatus, which decreases the flexibility to incorporate the unit for the recording method of the invention into existing printing equipment such as corrugators, digital web presses, etc.

Therefore, to achieve a high compact design of the apparatus, the inkjet print bars should be preferably positioned such as to wrap around a curved support or impression cylinder carrying the paper substrate during the adhering of the aqueous ink. An impression cylinder is particularly suitable for a paper substrate web which is being transported over the outer surface of the cylinder. Indeed, the dimensional stability of the paper substrate containing aqueous ink adhered onto its surface is much more guaranteed than with a conveyor belt or a combination of transport rollers in a curved configuration. As specially the width of the page wide array for a apparatus to be incorporated in a corrugator must be preferably equal to or larger than 1.6 m, 2.8 m or even 3.5 m, this dimensional stability of the paper substrate web is very critical. A suitable example how the inkjet printheads can be positioned around an impression cylinder is disclosed in Fig. 1 of US 2002/0168212 A1. Another advantage of an impression cylinder for transporting and providing the paper substrate web when adhering an aqueous inkjet ink according to the invention is that the design of the apparatus is much more compact.

A preferred ink jet printhead for the jetting of the aqueous inkjet ink is a piezoelectric inkjet printhead. Piezoelectric inkjet jetting is based on the movement of a piezoelectric ceramic transducer when a voltage is applied thereto. The application of a voltage changes the shape of the piezoelectric ceramic transducer in the print printhead creating a void, which is then filled with aqueous inkjet ink. When the voltage is again removed, the ceramic expands to its original shape, ejecting a drop of pre-treatment liquid from the inkjet printhead. However, the jetting of the ink according to the present invention is not restricted to piezoelectric inkjet printing.

Particularly suitable piezoelectric inkjet printheads are Gen5 and Gen5S from RICOH, KJ4B from KYOCERA, Samba G3L and G5L from FUJIFILM DIMATIX and the 5601 print head from XAAR.

Other inkjet print heads can be used and include various types, such as a continuous type, a thermal print head type, a Memjet-type of head and a valve jet type.

In a preferred embodiment, the inkjet printhead may be configured to recirculate the aqueous ink prior to printing. A particularly useful inkjet printhead to print the aqueous inkjet ink of the invention, is from the type that includes a recirculation of the ink within the printhead such as through-flow printheads as disclosed in WO 2006/030235 A2 and WO 2006/064036 A1. This type of inkjet printhead is very suitable to be incorporated in a printing system comprising a through-flow print head having one or more nozzles for ejecting drops of the aqueous ink. The ink circulation system for feeding and circulating the ink through the print head, comprises an ink tank for containing the ink, a supply buffer tank for receiving the ink from the main tank and supplying the ink to the through-flow print head, a return manifold for receiving the ink from the through-flow print head and returning the ink to the main ink tank via a pump.

Commercial examples of suitable piezoelectric through-flow print heads are the print heads Samba G3L and G5L from FUJIFILM DIMATIX, Rico Gen5F heads, Epson throughflow heads and the 5601 print-head from XAAR.

### (iii) A face roller

The apparatus according to the invention comprises a roller (also called face roller) having an outer surface contacting the first surface of the paper substrate, is present in downstream direction of the moving paper substrate. To achieve flexible incorporation of the apparatus in existing printing equipment such as corrugators, corrugated board production lines, digital web presses, offset presses, this face roller should be placed as close as possible to the means of adhering the aqueous inkjet ink of § A. To achieve maximal drying time after ink adherence, the face roller should be placed as far as possible to the means of adhering the aqueous inkjet ink. The distance, measured along the paper substrate track after the adhering of the inkjet ink should therefore be preferably less than 10 m, more preferably less than 2 m.

The outer surface of the face roller can be made of any material, but it is particularly beneficial to have transport rollers having an outer surface of metal such as stainless steel, chrome or copper. This outer surface material guarantees mechanical stability and resistance to wear and scratches occurring during the contacting with the first surface of the paper substrate.

According to a preferred embodiment of the invention, the face roller may have an outer surface which is covered with a polymer having repellent properties towards the compounds of the aqueous inkjet ink of §A. Due to the repelling properties, offset is further minimized and higher conveying speeds or shorter time laps between adhering the aqueous inkjet ink and contacting the face roller are possible. Suitable polymeric material which shows repelling properties are Teflon, nylon, polypropylene, Xylan, PTFE, PFA, FEP, etc...

### D. Examples

### D.1. Materials

All materials used in the following examples were readily available from standard sources such as Aldrich Chemical Co. (Belgium) and Acros (Belgium) unless otherwise specified.
- **Surfynol 104PG50** is a 50 wt.% solution of 2,4,7,9-Tetramethyl-5-decyne-4,7-diol in propylene glycol from Evonik
- **Dipropylene glycol mono-methyl ether** is supplied as Dowanol DPM from Dow inc.
- **Hydropalat WE 3650** is a modified ethoxylate surfactant from BASF
- Pluronic PE 6100 is a block copolymer of ethylene oxide and propylene oxide having a Mw of the polypropylene oxide block of 1750 g/mole and containing 10 wt.% of polyethylene oxide.
- Pluronic PE 6400 is a block copolymer of ethylene oxide and propylene oxide having a Mw of the polypropylene oxide block of 1750 g/mole and containing 40 wt.% of polyethylene oxide.
- Pluronic PE 6800 is a block copolymer of ethylene oxide and propylene oxide having a Mw of the polypropylene oxide block of 1750 g/mole and containing 80 wt.% of polyethylene oxide.
- Pluronic PE 9400 is a block copolymer of ethylene oxide and propylene oxide having a Mw of the polypropylene oxide block of 2750 g/mole and containing 40 wt.% of polyethylene oxide.
- Pluronic PE 10500 is a 18 wt.% aqueous solution of a block copolymer of ethylene oxide and propylene oxide having a Mw of the polypropylene oxide block of 3250 g/mole and containing 50 wt.% of polyethylene oxide.
- **CO4107K** is a self-dispersible black pigment from Cabot Corp.
- **D.I.water** is deionized water
- **Paper Liner** is Austroliner 3 an uncoated 135 gsm brown test liner from Hamburger Rieger having a Gurley porosity of 43.9 s.

### D.2. Evaluation methods

### D.2.1. Offset test

Offset was evaluated by measuring the color transferred onto a metallic (stainless steel) face roller from a non-dried ink coating adhered to a paper liner.

An aqueous ink composition was coated onto a paper liner by means of a 10 µm coating knife using a vacuum coating table from Elcometer. During the coating, at a distance of 5 cm from the coating knife, a metallic face roller was contacting the first surface of the paper liner which was covered with the ink coating. Considering the speed of the coating knife, this corresponds with a time of 1.5 s between the coating of the ink onto the paper liner and the contacting with the face roller.

The transferred ink onto the metallic face roller outer surface was collected with a cotton cloth specified in ISO 105 F09 which was impregnated with a water based flushing solution (Agora Aqueous Flush from Agfa NV). The cotton cloth was dried at 60°C for 30 minutes and the color (= L*a*b* and optical density) of the stained cotton cloth was then measured at 5 stained spots with a Gretag SPM50 spectrophotometer measuring device using a D50 illumination angle under a 2° observer.

The measured L-value was evaluated according to the criteria as listed in Table 1.

**Table 1: Evaluation criteria of offset**

| L-value | Criteria |
|---|---|
| ≥ 70 | No visible offset onto the metallic roller |
| < 70 | Strong offset onto the metallic roller |

### D.2.2. Color depth

The color depth of the coated aqueous inks was measured as an L-value. L-values are according to the CIELAB color space (also referred to as L*a*b*). This color space was defined by the International Commission on Illumination (abbreviated CIE) in 1976.Therefor, a 4 µm bar coating of the ink composition was made using an Elcometer coating table using a spiral bar of 4 µm onto the paper liner. After 24h at room temperature, the L-value is measured with a Gretag SPM 50 lab meter (D50 illumination, observer at 2°)

The measured L-value is evaluated according to the criteria as listed in Table 2.

**Table 2: Evaluation criteria of color depth**

| L-value | Criteria |
|---|---|
| < 32 | Excellent black color depth of coated images |
| 32-33 | Sufficient black color depth of coated images |
| > 33 | Insufficient black color depth of coated images |

### D.2.3. Jetting reliability

The inkjet inks were filtered over a 0.7 µm Whatman filter, degassed for 30 minutes in an ultrasound bath and filled in a Samba 2.4 pL cartridge supplied by Dimatix, which was mounted in a Dimatix TM DMP 2831 system.

The inks were jetted using a head temperature of 32°C, aiming at a drop speed of 7 m/s. Visual evaluations were done of the jetting behaviour of 5 nozzles and by counting the number of nozzles failing in jetting onto an Austroliner 3 substrate with a 2 dpd waveform.

For the 60 kHz reliability test, inks were jetted continuously at 60kHz for 30 seconds and the number of failing nozzles was counted.

### D.3. Ink preparations

Comparative and inventive aqueous inks were prepared by diluting black pigment dispersions with the ingredients according to Table 3. The amounts of the dispersion and ingredients are expressed in wt.% based on the total weight of the ink. D.I.-water was added to complete the ink to the desired pigment concentration.

**Table 3: Comparative ink compositions for offset and color depth test.**

| Compound | COMP-INK1 | INV-INK1 | INV-INK2 | INV-INK3 | INV-INK4 | INV-INK5 | INV-INK6 |
|---|---|---|---|---|---|---|---|
| C04107K | 30.0 | 30.0 | 30.0 | 30.0 | 30.0 | 30.0 | 30.0 |
| 1,2-propane diol | 31.0 | 17.5 | 16.5 | 16.1 | 16.1 | 14.5 | 16.6 |
| n-butanol | - | - | 2.95 | 2.95 | 2.95 | 1.0 | 2.95 |
| Dipropylene glycol mono-methyl ether | 10.0 | 7.9 | 8.1 | 7.2 | 7.7 | 6.5 | 7.1 |
| Pluronic PE 6400 | - | 4.0 | - | 5.0 | - | 6.0 | - |
| Pluronic PE 6800 | - | - | - | - | - | - | 6.0 |
| Pluronic PE 9400 | - | - | - | - | 5.0 | - | - |
| Pluronic PE 10500 | - | - | 22.22 | - | - | - | - |
| Surfynol 104PG50 | 0.4 | 0.4 | 0.4 | 0.4 | 0.4 | 0.4 | 0.4 |
| D.I.water | Up to 100 wt. % | Up to 100 wt. % | Up to 100 wt. % | Up to 100 wt. % | Up to 100 wt. % | Up to 100 wt. % | Up to 100 wt. % |

### D.4. Evaluation of offset and color depth of printed images.

The color depth of the inks coated onto a paper liner as described in § D.2.2. together with the offset of the coated inks onto a metallic roller (as described in § D.2.1.) are listed in Table 4.

**Table 4: Results of color depth (L-value) and offset onto metallic transport roller**

| INK | L-value INK | Offset (L-value) |
|---|---|---|
| COMP-INK1 | 34 | 70.2 |
| INV-INK1 | 33 | 78.0 |
| INV-INK2 | 33 | 73.2 |
| INV-INK3 | 33 | 75.5 |
| INV-INK4 | 33 | 72.1 |
| INV-INK5 | 32 | 72.6 |
| INV-INK6 | 30 | 72.7 |

From Table *4*, it can be observed that the coatings on paper liner with the inventive inks comprising a pigment, a water-soluble alkane diol in an amount from 10 wt.% to 37 wt.%, a water-soluble alkyl glycol ether in an amount from 5 wt.% to 20 wt.%, a block copolymer of ethylene oxide and propylene oxide ether in an amount from 2 wt.% to 10 wt.% and a non-ionic surfactant show an excellent color depth (L-value) and at the same time, do not transfer colored ink components to the metallic transport roller when the coatings have not been dried. It can also be observed from Table 4 that the inventive inks contain a significant lower amount of water soluble organic solvents. Lower amounts of water-soluble organic solvents in printing inks has advantages regarding environment, security and health of co-workers involved in the production process of printed corrugated card board.

### D.5. Evaluation of the jetting reliability experiments

The jetting reliability of three inks, COMP-INK1, INV-INK2, INV-INK4, INV-INK5 and INV-INK6 was evaluated according to § D.2.3. The results of the tests are summarized in Table 5.

**Table 5: Jetting reliability results of aqueous inkjet inks**

| | COMP-INK1 | INV-INK2 | INV-INK4 | INV-INK5 | INV-INK6 |
|---|---|---|---|---|---|
| Failing nozzles at 60 kHz after 30 s jetting | 5 | 0 | 1 | 1 | 0 |

From Table 5 it can be observed that the aqueous inkjet inks according to the invention, hence comprising a pigment, a water-soluble alkane diol in an amount from 10 wt.% to 37 wt.%, a water-soluble alkyl glycol ether in an amount from 4 wt.% to 20 wt.%, a block copolymer of ethylene oxide and propylene oxide ether in an amount from 2 wt.% to 10 wt.% and a non-ionic surfactant, do show a better ink jetting reliability than the comparative ink not containing the block copolymer of ethylene oxide and propylene oxide ether.

## Claims

1. An aqueous inkjet ink composition comprising a pigment, a water-soluble alkane diol in an amount not less than 10 wt.% and not more than 37 wt.% with respect to the total weight of the ink, a water-soluble alkyl glycol ether in an amount not less than 4 wt.% and not more than 20 wt.% with respect to the total weight of the ink, a block copolymer of ethylene oxide and propylene oxide ether in an amount not less than 2 wt.% and not more than 10 wt.% with respect to the total weight of the ink and a non-ionic surfactant.

2. The aqueous inkjet ink composition according to claim 1 wherein the block copolymer of ethylene oxide and propylene oxide ether is according to Formula (A) or Formula (B). 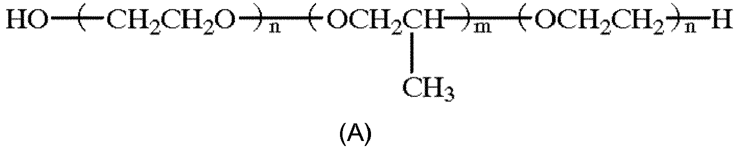 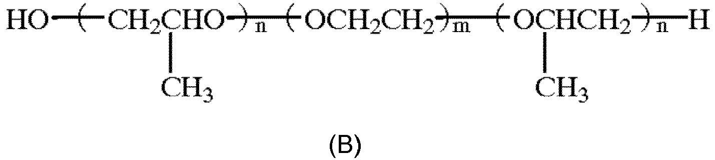 wherein n is a number not less than 2 and not more than 37, m is a number not less than 30 and not more than 56

3. The aqueous inkjet ink composition according to Claim 2 wherein the the average molecular weight of the polypropylene oxide block is not less than 850 g/mol and not more than 3500 g/mol while the content of the polyethylene oxide blocks is not less than 10 wt.% and not more than 90 wt.%.

4. The aqueous inkjet ink composition according to any of the preceding claims wherein the aqueous ink comprises an alkyl alcohol having an alkyl group comprising 1 to 7 carbon atoms in an amount not less than 1 wt.% and not more than 5 wt.% with respect to the total weight of the ink

5. The aqueous inkjet ink composition according to any of the preceding claims wherein the pigment is selected from a group consisting of a self-dispersible pigment and a pigment encapsulated by means of a crosslinked polymer.

6. The inkjet ink composition according to any of the preceding claims wherein the pigment is a black pigment.

7. Image recording method to produce a printed corrugated cardboard, including the steps of:
i. Providing a paper substrate; and
ii. Adhering an aqueous ink onto a first surface of the paper substrate by means of an inkjet print head to obtain a printed paper substrate, the aqueous ink comprising a pigment, a water-soluble alkane diol in an amount not less than 10 wt.% and not more than 37 wt.% with respect to the total weight of the ink, a water-soluble alkyl glycol ether in an amount not less than 4 wt.% and not more than 20 wt.% with respect to the total weight of the ink, a block copolymer of ethylene oxide and propylene oxide ether in an amount not less than 2 wt.% and not more than 10 wt.% with respect to the total weight of the ink and a non-ionic surfactant; and
iii. Contacting the first surface of the printed paper substrate with a roller.

8. The image recording method according to Claim 7 wherein the block copolymer of ethylene oxide and propylene oxide is according to Formula (A) or Formula (B) : 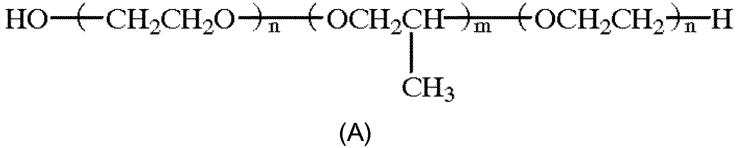 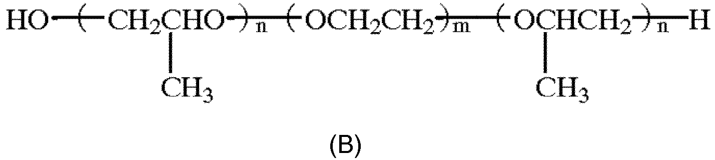 wherein n is a number not less than 2 and not more than 37, m is a number not less than 30 and not more than 56.

9. Image recording method according to Claim 8 wherein the aqueous ink comprises an alkyl alcohol having an alkyl group comprising 1 to 7 carbon atoms in an amount not less than 1 wt.% and not more than 5 wt.% with respect to the total weight of the ink.

10. Image recording method according to Claim 7 to Claim 9 wherein the contacting is within 3 seconds after the adhering of the aqueous ink.

11. Image recording method according to Claim 7 to Claim 10 wherein the paper substrate has a Gurley porosity equal to 100 seconds or less.

12. Image recording method according to Claim 7 to Claim 11 wherein the paper substrate is a paper substrate web and the adhering of the aqueous ink onto the paper web is done by means of at least two inkjet printheads having a first axis and a nozzle resolution of not less than 300 nozzles/inch in the direction of the first axis, both first axis being parallel to each other and perpendicular to the moving direction of the paper web.

13. Image recording method according to Claim 7 to Claim 12 wherein the outer surface of the roller is metallic.

14. Image recording method according to Claim 7 to Claim 13 wherein the adhering amount of aqueous ink onto the first surface of the paper substrate is not less than 3 g/m².

15. Image recording method according to Claim 7 to Claim 14 wherein the paper substrate in step (i) is provided onto an impression cylinder.
